# EUROPEAN PATENT APPLICATION

(11) **EP 4 148 653 A1**
(43) Date of publication of application: **15.03.2023**
(21) Application number: 22194075.2
(22) Date of filing: 06.09.2022
(51) Int. Cl.: G06Q 50/06

(54) **GREEN ENERGY BASED DIGITAL ASSET TRANSFER AND ISSUANCE SYSTEM AND METHOD THEREOF**

(30) Priority: 11.09.2021 TW 110133892
(71) Applicant: Yao, Li-Ho, 106 Taipei City (TW)
(72) Inventor: Yao, Li-Ho, 106 Taipei City (TW)
(74) Representative: Horak, Michael

(57) **Abstract**

A green energy based digital asset transfer and issuance system and a method thereof are disclosed and are applicable to a green energy bank and at least one individual user. The system includes a reserve management unit (10), an issuance management unit (20), at least one energy storage unit (30), at least one transaction unit (40), and at least one terminal unit (50), which are operated with steps (a) the green energy bank purchasing at least one green energy; (b) summing the purchased green energy into a green energy reserve; (c) issuing the green energy reserve into a digital asset; and (d) using the digital asset to conduct trading with at least one individual user. As such, the green energy bank issues green energy into a digital asset to allow an individual user to do trading with the digital asset, so as to prosper the green energy business.

## Description

### TECHNICAL FIELD OF THE INVENTION

The present invention relates generally to the technical field of transfer and use of digital assets, and more particularly to a green energy based digital asset transfer and issuance system and a method thereof, with which green energy is issued as digital assets for trading by individual users.

### DESCRIPTION OF THE PRIOR ART

In view of exhaustion of traditional energy storage and shortage of energy, in combination with severe pollution of the environment, people are becoming highly relying on green energy. Recently, the acquisition efficiency and stability of green energy have been greatly upgraded and the conventional concerns about high cost and instability have been overcome, so that the desire for use by generally families and businesses has also increased.

However, green production facilities that are currently available require extremely high investment expenditure and safety consideration, and have great loss, maintenance, and risk, and are thus presently almost owned or operated by large-sized chartered business units. This makes the green energy business monopolized by large companies and general families or small businesses (which are collectively referred to as individual users) are prevented from joining and sharing the green energy business. Consequently, an individual user, even having established an installation for producing green energy, is potentially not likely to do any transaction for the green energy, and this would reduce the desire for the individual users to build up any installation for producing green energy.

Further, global warming has already severely threatened the safety of human economic life. To fulfill the target for reducing greenhouse gas emission, purchase/sale of emission allowances (also referred to as carbon credit) is conducted with carbon trading, so that the total carbon emission can be effectively controlled by means of the market mechanism. However, in practical operation, the trading of carbon credit is handled by large trading companies of the developed countries, and the economic advantage so produced is not commonly enjoyed by the individual users who make a large amount of carbon emission, so that people's desire of using green energy is reduced, making it not possible to actually achieve the goal of energy saving and carbon reduction.

In other words, due to the inherent problems of the known green energy trading schemes, the green energy business cannot be popularized to the individual users, resulting in no true resolution for the issues of energy saving and carbon reduction, and thus, there is no way to effectively create and revive the green energy business. This invention aims to develop a solution for such problems.

In view of the above, the present invention is made through deeply searching into circulation problems in respect of the reduction of green electricity produced by the individual users and carbon credit being not readily tradable, for the purposes of overcoming the drawbacks and inconveniences that the individual users cannot easily make green energy trading in respect of green electricity and carbon credits.

### SUMMARY OF THE INVENTION

The primary objective of the present invention is to enable transfer and issuance of accumulated green energy as a digital asset in order to allow the digital asset to be used by individual users to conduct trading of green energy to thereby prosper the green energy business and allow all people to circulate and use the green energy.

Another objective of the present invention is to allow the individual users to do all sorts of trading by using the digital asset so issued, so as to create sharing economy of green energy.

### BRIEF DESCRIPTION OF THE DRAWINGS

FIG. 1 is a schematic view showing system architecture of the present invention.
FIG. 2 is a schematic view showing a flow chart of a method of the present invention.

### DETAILED DESCRIPTION OF THE PREFERRED EMBODIMENT

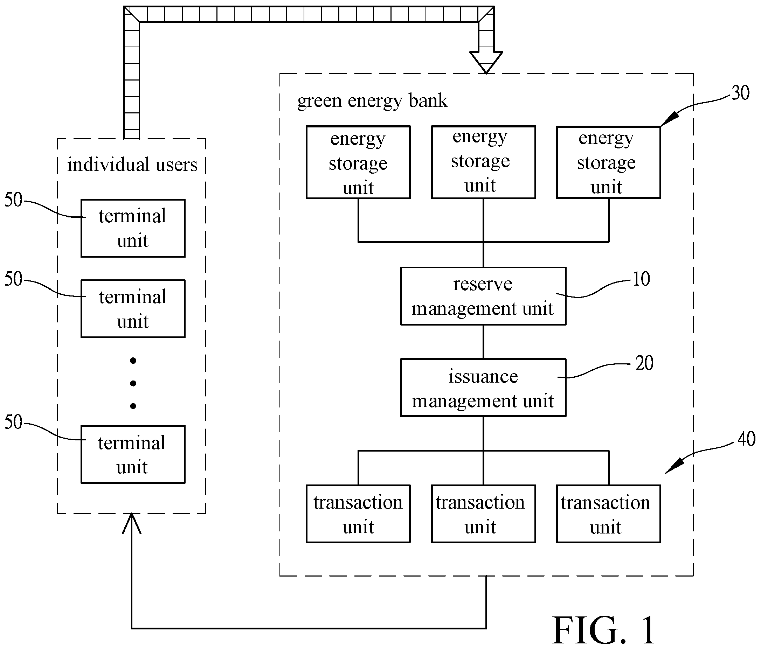

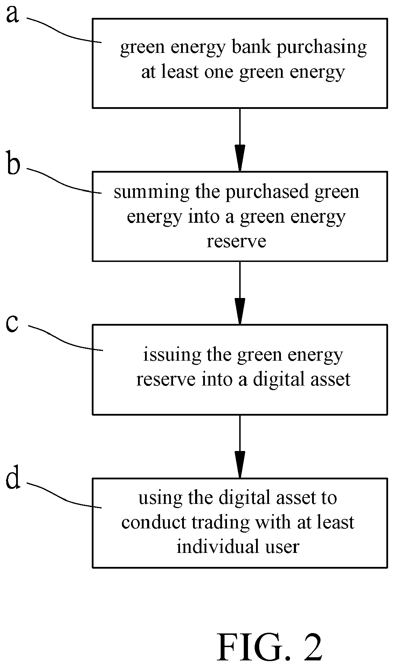

A detailed structure of a system according to the present invention is shown in FIGS. 1 and 2. The system is applicable to a green energy bank and at least one individual member, and comprises a reserve management unit 10, an issuance management unit 20, at least one energy storage unit 30, at least one transaction unit 40, and at least one terminal unit 50.

The reserve management unit 10 is connected to the energy storage units 30 for purchasing, contracting, or storing all sorts of green energy, the green energy including, but not limited to, green electricity, such as solar energy, wind energy, geothermal energy, and tidal energy, or carbon credit. The reserve management unit 10 functions to manage purchase cost and value of the green energy. The reserve management unit 10 functions to convert and sum green energies of different values into a green energy reserve of same pricing unit.

The issuance management unit 20 is connected to the reserve management unit 10. The issuance management unit 20 functions to issue a digital asset based on a total value of the green energy reserve. A currency value of the digital asset can be of an equal value of a currency value of a common currency. The issuance management unit 20 functions to manage circulation and exchange of the digital asset.

The energy storage units 30 are selectively connected to the reserve management unit 10, and the energy storage units 30 function to store and manage transfer of all sorts of green energy after trading or transaction. The energy storage units 30 may include, but not limited to, an energy storage battery, or swap of electrical power contract or carbon credit contract.

The transaction units 40 are selectively connected to the issuance management unit 20, and the transaction units 40 function to execute trading and transfer of digital asset between the issuance management unit 20 and the terminal units 50. Further, the trading of digital asset between the transaction units 40 and the terminal units 50 is made tying in with the transfer of green energy conducted with the energy storage units 30.

The terminal units 50 are operable by individual users, and the terminal units 50 are selectively connectable with the transaction units 40 or/and the energy storage units 30. Further, the terminal units 50 are made for carrying, storing, calculating, and trading each green energy or/and digital asset, so that the individual users may use the terminal units 50 to conduct trading of digital asset with the transaction units 40, or may use the terminal units 50 to implement transfer of green energy with respect to the energy storage units 30.

As such, the individual users are allowed to conduct trading of green energy by using the digital asset, and thus, a green energy based digital asset transfer and issuance system is constructed.

In an actual use of the present invention, as shown in FIGS. 1 and 2, the reserve management unit 10 of the green energy bank converts and sums green energies of different values into a green energy reserve of the same pricing unit, and uses the issuance management unit 20 to issue into a digital asset based on a total value of the green energy reserve, so that the individual users may conduct green energy trading. Steps of a method according to the present invention are as follows:
(a) green energy bank purchasing at least one green energy: a green energy bank purchases at least one green energy (which includes, but is not limited to, green electricity, such as solar energy, wind energy, geothermal energy, and tidal energy, or carbon credit) from at least one green energy production unit (which includes, but is not limited to, an individual user, a green energy power plant, an electrical vehicle workshop), wherein a currency for the transaction or trading is not limited to a common currency or a digital asset, which will be described hereinafter;
(b) summing purchased green energy into green energy reserve: the green energy bank sums up the green energy so purchased and sets up a rated amount of the green energy for converting into a green energy reserve;
(c) issuing green energy reserve into digital asset: the green energy bank issues a digital asset based on a value of the green energy reserve, and a currency value of the digital asset can be of an equal value of a currency value of a common currency; and
(d) using digital asset to conduct trading with at least individual user: the digital asset issued by the green energy bank is useful for trading conducted between the green energy bank and the individual users or between the individual users, wherein items of trading may include purchase/sale of the above-discussed green energy (including, but not limited to, green electricity and carbon credit), or purchase/sale of general commodity.

The present invention may be further understood, by means of the following embodiment, for actual uses thereof, such as:

### EMBODIMENT 1: production of green energy reserve and issuance of digital asset

One green energy bank purchases, by means of the energy storage unit 30 thereof, green energy (including, but not limited to, green electricity and carbon credit) from a green energy production unit (such as a solar energy and wind power based power plant or an electrical vehicle workshop, or an individual user), and converts, by means of the reserve management unit 10 thereof, the green energy so purchased into a green energy reserve having a predetermined amount (for example, among a purchase of green energy of more than 50 hundred millions, 50 hundred millions are designated for green energy reserve), and then issues, by means of the issuance management unit 20, a total of the green energy reserve into a digital asset (for example conversion of the 50 hundred millions of green energy reserve into 50 hundred million units of digital asset), wherein the digital asset is of an equal value of a common currency or has a fixed exchange rate with respect to the common currency.

### EMBODIMENT 2: application for purchase/sale of electricity

After the green energy bank completes the issuance of the digital asset, an individual user may use a terminal unit 50 that has a function of storage to do purchase of sale of electricity with respect to a transaction unit 40 of a platform of the green energy bank, wherein the terminal unit 50 is made in connection with an energy storage unit 30 of the green energy bank, so that when the individual user selects sale of electricity, a specific amount of electricity is outputted from the terminal unit 50 to the energy storage unit 30, and the green energy bank makes a payment of a digital asset corresponding to the specific amount of electricity to the terminal unit 50 by means of the transaction unit 40. Oppositely, when the individual user selects purchase of electricity, the terminal unit 50 is made to pay a digital asset corresponding to a corresponding amount of electricity to the transaction unit 40 of the green energy bank, and then, the energy storage unit 30 is caused to output the amount of electricity corresponding to the digital asset so paid into the terminal unit 50.

### EMBODIMENT 3: application for trading of carbon credit

After the green energy bank completes the issuance of the digital asset, an individual user may have an electrical vehicle or an electricity-consuming device interconnected with the terminal unit 50, and in operation, when the electrical vehicle or the electricity-consuming device is inspected for operation thereof, which includes, but is not limited to, energy consumption data, such as vehicle travel distance, load, or consumption of electricity, the terminal unit 50 receives such an energy consumption data and conduct computation for a reduction of carbon emission amount, wherein by virtue of the terminal unit 50 being interconnectable with the transaction unit 40 and the energy storage unit 30, the individual user is allowed to sell carbon credit to the green energy bank, and the green energy bank makes a payment of digital asset corresponding to the carbon credit to the terminal unit 50 by means of the transaction unit 40.

### EMBODIMENT 4: trading conducted with digital asset

After the green energy bank completes the issuance of the digital asset, an individual user may have the terminal unit 50 owned thereby to set up connection with the terminal unit 50 of an individual user owning a commercial product for sale or the transaction unit 40 of the green energy bank to directly conduct trading for all sorts of commercial products therebetween by using the digital asset thereof.

It is known from the above that the present invention transfers and issues a green energy (including, but not limited to, green electricity and carbon credit) into a digital asset, allowing an individual user to use the digital asset to do green energy trading, so as to prosper the green energy business and allow all people to circulate and use green energy and create sharing economy of green energy market, so that individual users of general families or small businesses may devote themselves into the green energy business to thereby resolve the issue of energy shortage and to further promote economy.

## Claims

1. A green energy based digital asset transfer and issuance system, which is applicable to a green energy bank and at least one individual user, the system comprising:
a reserve management unit (10), which is operable to store green energy in energy storage unit (30), the reserve management unit (10) being operable to manage the green energy, the reserve management unit (10) being operable to convert and sum green energy of different values into a green energy reserve of a same pricing unit;
an issuance management unit (20), which is connected to the reserve management unit (10), the issuance management unit (20) being operable to issue a digital asset based on a total value of the green energy reserve, the issuance management unit (20) being operable to manage circulation and exchange of the digital asset;
at least one energy storage unit (30), which is connected to the reserve management unit (10), the energy storage unit (30) being operable to store and manage transfer of the green energy;
at least one transaction unit (40), which is connected to the issuance management unit (20), the transaction unit (40) being operable to execute trading and transfer of the digital asset between the issuance management unit (20) and terminal unit (50); and
at least one terminal unit (50), which is operable by the individual user, the terminal unit (50) being selectively connectable to the transaction unit (40) or/and the energy storage unit (30), the terminal unit (50) being operable to carry, store, calculate, and trade each green energy or/and digital asset;
wherein the individual user uses the terminal unit (50) to do trading of digital asset with respect to the transaction unit (40) of the green energy bank, or uses the terminal unit (50) to do transfer of green energy with respect to the energy storage unit (30) of the green energy bank, so that the individual user is allowed to do trading by using the digital asset issued by the green energy bank.

2. The green energy based digital asset transfer and issuance system according to claim 1, wherein the green energy is green electricity or carbon credit.

3. The green energy based digital asset transfer and issuance system according to claim 2, wherein the green electricity includes electrical power generated with solar energy, wind energy, geothermal energy, or tidal energy.

4. The green energy based digital asset transfer and issuance system according to claim 1, wherein a currency value of the digital asset is of an equal value to or has a fixed rate of exchange with respect to a common currency.

5. A green energy based digital asset transfer and issuance method, which is applicable to the system according to any one of claims 1-4, the method at least comprising:
(a) green energy bank purchasing at least one green energy;
(b) summing the green energy so purchased into a green energy reserve;
(c) issuing the green energy reserve into a digital asset; and
(d) using the digital asset to conduct trading with respect to at least one individual user.
